# EUROPÄISCHE PATENTANMELDUNG

(11) **EP 1 201 532 A1**
(43) Veröffentlichungstag der Anmeldung: **02.05.2002**
(21) Anmeldenummer: 00123131.5
(22) Anmeldetag: 25.10.2000
(51) Int. Cl.: B62H 5/00, B62H 5/20, E05B 49/00

(54) **Sperrvorrichtung, Nutzobjekt mit einer solchen und Verfahren zur zeitlich begrenzten Freigabe eines Nutzobjektes**

(71) Anmelder: BkTech AG, 3422 Kirchberg (CH)
(72) Erfinder: Häuselmann, Christian, 3012 Bern (CH); Kohlbrenner, Philippe David, 3413 Kaltacker (CH); Böhlen, Reto, 3053 Wiggiswil (CH)
(74) Vertreter: Blum, Rudolf Emil Ernst

(57) **Zusammenfassung**

Bei einer Sperrvorrichtung (2), die in einer Sperranlage (1) mit einem Nutzobjekt verbunden ist, um unter Kontrolle einer Zentrale (3) ein Nutzobjekt freizugeben oder zu sperren, wird eine Zweiwegkommunikation zwischen Sperrvorrichtung und Zentrale über ein tragbares Telefon (5) des Nutzers hergestellt, um die Kodeinformation zu übertragen. Die Sperrvorrichtung ist dafür mit Mikrofon und Lautsprecher zur akustischen Ankopplung des Telefons versehen.

## Beschreibung

Die Erfindung betrifft eine Sperrvorrichtung nach Oberbegriff des Anspruchs 1, ein Nutzobjekt, insbesondere ein Fahrrad, mit einer solchen sowie ein Verfahren zur zeitlich begrenzten Nutzung eines Nutzobjektes gemäss Oberbegriff des Anspruchs 12.

Aus der DE-C-195 28 203 ist eine Sperrvorrichtung für Nutzobjekte, insbesondere Fahrräder bekannt. Dabei wird ein Öffnungskode von einer Zentrale, bei welcher sich der Nutzer gemeldet hat, an die Sperrvorrichtung gesandt, nachdem diese durch einen Anforderungskode, der von der Sperrvorrichtung, bzw. dem Nutzer, an die Zentrale gesandt wurde, von der Zentrale identifiziert worden ist. Beim Empfang des Öffnungskodes gibt die Sperrvorrichtung die Nutzung des Nutzobjektes, bzw. des Fahrrades, frei. Will der Nutzer die Nutzung beenden, so hat er einen Endekode einzugeben, worauf sich die Sperrvorrichtung sperrt, bzw. das Fahrrad blockiert, und einen Quittungskode abgibt, der der Zentrale angibt, dass die Nutzung beendet ist. Die Zentrale kann dann dem Nutzer zeit- bzw. nutzungsabhängig Rechnung stellen oder ein Guthaben des Nutzers belasten. Bei einem in München, Deutschland, in Betrieb befindlichen Fahrradverleih mit einer Vielzahl von derart ausgerüsteten Fahrrädern wird gemäss der DE-C-195 28 203 vorgegangen, die Eingabe des Endekodes ist aber durch das einfache Betätigen einer Ende-Taste auf der Tastatur des Schlosses ersetzt. Es wird dann von der Sperrvorrichtung, bzw. dem Fahrradschloss, der Schliesskode, bzw. Quittungskode angezeigt, der vom Nutzer an die Zentrale durchgegeben werden muss. Die DE-C-195 28 203 erwähnt die Möglichkeit einer Übertragung der Kodes zwischen Zentrale und Sperrvorrichtung über elektromagnetische Signale und erwähnt ferner Telefonverbindungen, welche bei der Nutzung von Fahrrädern so eingesetzt werden, dass die Fahrräder in der Nähe von Telefonkabinen abgestellt sind und der Nutzer mündlich Kontakt mit der Zentrale aufnimmt und die Kode mündlich an diese durchgibt, bzw. die gehörten Kode an der Tastatur der Sperrvorrichtung in diese eingibt. Der Nutzer muss daher neben seinem eigenen Identifikationskode, der ihn bei der Zentrale legitimiert, auch noch die jeweiligen Kode der jeweiligen Sperrvorrichtung, bzw. des Fahrrades memorieren, was unkomfortabel ist und zu Fehleingaben führen kann.

US-A-6 072 402 zeigt ebenfalls eine Sperrvorrichtung. Diese steht in der Regel über einen eigenen Funksender und einen eigenen Funkempfänger mit einer Zentrale in Verbindung, die die Nutzeridentifikation durchführt und aufgrund der Rückmeldungen der Sperrvorrichtung eine Datenbank führt. Im dritten Ausführungsbeispiel dieser Schrift wird erwähnt, dass die Zentrale den Zugangsberechtigungskode nicht direkt an die Sperrvorrichtung übermittelt, sondern an ein tragbares Telefon des Nutzers, das diesen Kode als Audiotonfolge an die Sperrvorrichtung übermittelt. Die von der Sperrvorrichtung abgegebene Rückinformation an die Zentrale erfolgt indes per Funksender der Sperrvorrichtung.

Der Erfindung liegt die Aufgabe zugrunde, eine Sperrvorrichtung der eingangs genannten Art für den Nutzer besser bedienbar zu machen.

Dies wird erfindungsgemäss durch die kennzeichnenden Merkmale des Anspruchs 1 erreicht.

Dadurch, dass die Sperrvorrichtung zur Zweiwegkommunikation mit dem tragbaren Telefon des Nutzers ausgestaltet wird, kann sowohl der Nutzungsbeginn als auch das Nutzungsende, und allenfalls auch ein Nutzungsunterbruch, der Zentrale mitgeteilt werden, ohne dass der Nutzer einen Kode memorieren muss.

Bei einer bevorzugten Ausführungsform ist die Sperrvorrichtung aus einem Ruhezustand in den Betrieb mit Zweiwegkommunikation schaltbar. Auf diese Weise ist ein stromsparender, besonders für mobile Anwendungen der Sperrvorrichtung günstiger Betrieb möglich. Weiter ist es bevorzugt, wenn die Kommunikation mit dem tragbaren Telefon des Nutzers über eine akustische Schnittstelle mit Lautsprecher und Mikrofon in der Sperrvorrichtung erfolgt, die beabstandet so angeordnet sind, dass sie mit dem Hörteil und dem Sprechteil des tragbaren Telefons akustisch in Verbindung treten können.

Bei einer weiteren bevorzugten Ausführungsform ist die Sperrvorrichtung als Schlüsselhalterung ausgestaltet, die einen Schlüssel sperrt oder freigibt, wobei der Schlüssel bei einer bevorzugten Verwendung bei einem Fahrrad als Nutzobjekt der Schlüssel des Fahrradschlosses ist.

Der Erfindung liegt weiter die Aufgabe zugrunde ein Verfahren zur zeitlich begrenzten Nutzung von Nutzobjekten, insbesondere Fahrrädern zu schaffen, welches die genannten Nachteile vermeidet.

Diese Aufgabe wird bei einem Verfahren der eingangs genannten Art mit den kennzeichnenden Merkmalen des Anspruchs 12 gelöst.

Dadurch, dass die die Nutzung einleitenden und beendenden Mitteilungen zwischen Sperrvorrichtung und Zentrale über die Zweiweg-Schnittstelle mit dem Telefon des Nutzers übermittelt werden, entfällt für den Nutzer die Aufgabe des Memorierens von Kodefolgen.

Bevorzugterweise wird die Sperrvorrichtung durch einen Weckkode oder einen Weckschalter in den Zweiweg-Betrieb versetzt. Weiter ist es bevorzugt, wenn die Sperrvorrichtung als Schlüsselhalterung ausgestaltet ist.

Im folgenden werden Ausführungsbeispiele der Erfindung anhand der Zeichnungen näher erläutert. Dabei zeigt
Figur 1 schematisch eine Sperrvorrichtung und eine Zentrale;
Figur 2 ein Ablaufschema der Freigabe der Sperrvorrichtung von Figur 1 bei der Ausleihe eines Nutzobjektes; und
Figur 3 ein Ablaufschema bei der Arretierung der Sperrvorrichtung von Figur 1.

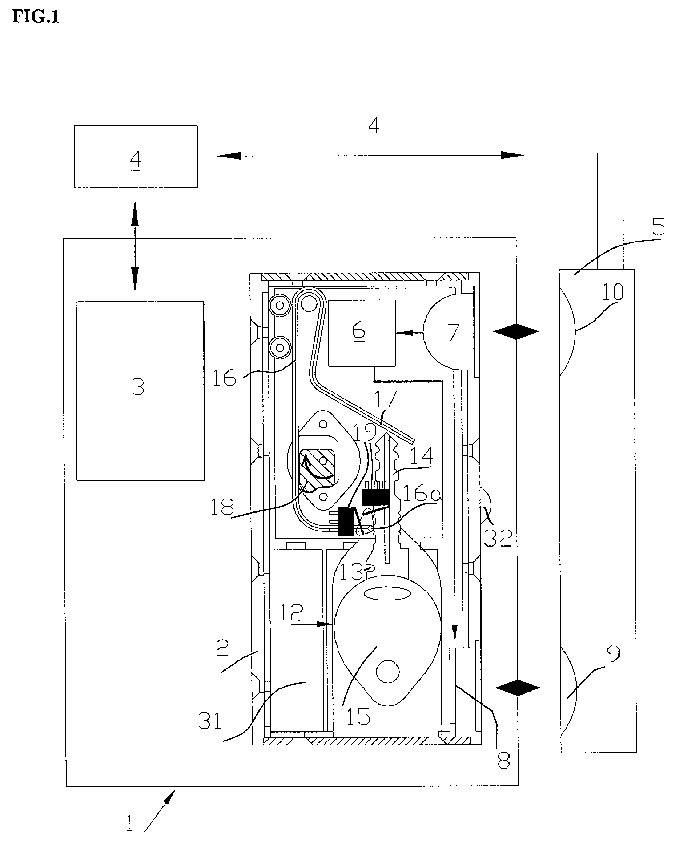

Figur 1 zeigt eine Ausführungsform einer Sperranlage 1 gemäss der Erfindung in z.T. grob schematischer und z.T. genauer ausgeführten Weise. Die Sperranlage 1 umfasst dabei eine Mehrzahl von Sperrvorrichtungen 2, wobei in der Figur nur eine solche Vorrichtung dargestellt ist, und eine Zentrale 3, welche die Sperrvorrichtungen 2 kontrolliert. Die Zentrale 3 enthält dabei eine Datenbank mit den Angaben zu den einzelnen Sperrvorrichtungen, bzw. deren Kodewörter, und eine Datenbank über die berechtigten Nutzer der einzelnen mit den Sperrvorrichtungen 2 versehenen Nutzobjekte. Im weiteren Verlauf wird die Sperranlage 1, bzw. das Verfahren zur Nutzung der Objekte anhand von Fahrrädern als Nutzobjekte näher beschrieben, wobei natürlich auch andere Anwendungen für zeitweise nutzbare Gegenstände, z.B. Automobile, Boote, Schliessfächer, möglich sind.

Die Zentrale 3 bildet eine Zugangskontrolleinheit, welche nur befugte Benutzer, die sich vorher bei der die Fahrräder ausleihenden Firma legitimiert haben, zur Nutzung zulässt. Die Nutzer haben zu diesem Zweck ein Passwort, bzw. einen Zugangskode, erhalten, mit welchem sie sich bei der Zentrale 3 als berechtigte Nutzer eines Fahrrades legitimieren können. Die Sperrvorrichtungen 2 befinden sich jeweils getrennt von der Zentrale bei den einzelnen Nutzobjekten, bzw. Fahrrädern. Im dargestellten Beispiel ist die Sperrvorrichtung eine Schlüsselhalterung, welche einen Schlüssel 12 eines Fahrradschlosses in sich aufnimmt, wie noch näher beschrieben wird. Die Sperrvorrichtung 2 könnte aber auch direkt das Fahrradschloss sein, welches z.B. einen darin arretierbaren und freigebbaren Schlossbügel aufweist, mittels welchem das Fahrrad gegen unbefugten Gebrauch gesichert werden kann. Die dargestellte Sperrvorrichtung 2 als Schlüsselhalterung kann am Fahrrad z.B. am Lenker oder im Bereich eines Gepäckträgers angeordnet sein und nimmt den eigentlichen Schlüssel 12 des weiter vorhandenen Fahrradschlosses in sich auf, wobei das Fahrradschloss mit dem Schlüssel 12 zur Benutzung und zur Sicherung des Fahrrades auf bekannte Weise bedient wird. Die Sperrvorrichtung 2 ist nun so ausgestaltet, dass sie mit einem tragbaren Telefon 5, insbesondere mit einem nach dem GSM-Standard arbeitenden Telefon, über eine Schnittstelle Informationen austauschen kann. In der Figur ist dies dadurch dargestellt, dass die Sperrvorrichtung ein Mikrofon 7 und einen Lautsprecher 8 aufweist, welche mit der Steuerelektronik 6 der Sperrvorrichtung 2 verbunden sind. Das Mikrofon 7 und der Lautsprecher 8 sind derart angeordnet, dass sie im wesentlichen so voneinander beabstandet sind, wie dies beim Lautsprecher 10 und Mikrofon 9 des tragbaren Telefons 5 der Fall ist, wobei dieser Abstand gegeben durch den Abstand von Ohr und Mund des Telefonbenutzers für alle tragbaren Telefone im wesentlichen derselbe ist. Die Sperrvorrichtung 2 kann dadurch über das Telefonnetz 4 eine Zweiwegkommunikation mit der Zentrale 3 durchführen, wenn das tragbare Telefon so gegen die Sperrvorrichtung gehalten wird, dass von der Zentrale ausgesandte Kodetonfolgen über den Lautsprecher 10 des Telefons zum Mikrofon 7 und zur Steuerelektronik 6 der Sperrvorrichtung gelangen und von der Steuerelektronik 6 der Sperrvorrichtung 2 erzeugte Kodetonfolgen über den Lautsprecher 8 der Sperrvorrichtung und das Mikrofon 9 des Telefons 5 zur Zentrale 3 gelangen.

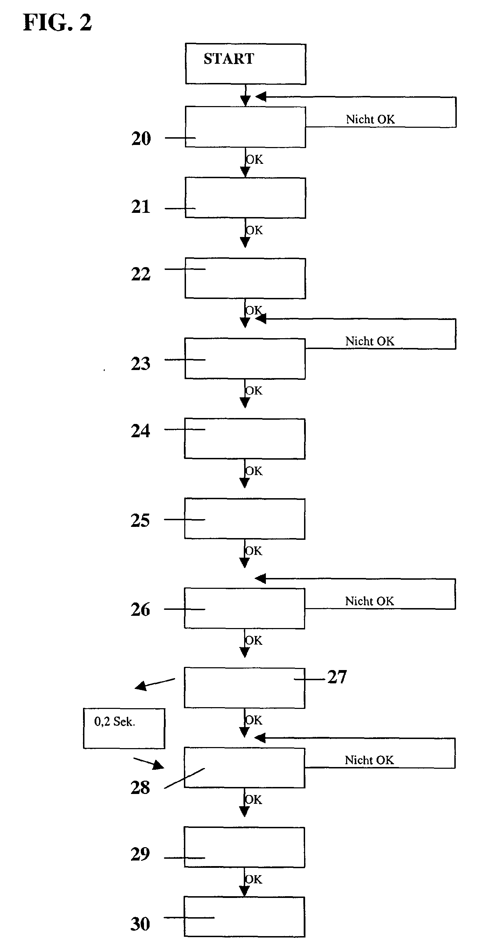

Im folgenden wird anhand der Figuren 1 und 2 die Ausmietung eines mit der Sperrvorrichtung 2 versehenen Fahrrades näher erläutert. Ausgangspunkt ist dabei, dass das Fahrrad mit abgeschlossenem Fahrradschloss und mit in die Sperrvorrichtung 2 eingeführtem Schlüssel 12 des Fahrradschlosses zur Nutzung bereitsteht. In dieser Stellung ist der Schlüssel 12, entgegen der Darstellung von Figur 1, soweit in die Schlüsselhalterung 2 eingeschoben, dass das vordere Ende 16 a der Feder 16 in die Kerbe 13 des weiter in Richtung auf das hintere Ende 17 der Feder 16 in die Schlüsselhalterung eingeschobenen Schlüssels eingreift, so dass das Federende 17 weiter nach hinten gebogen ist und das freie Ende des Schlüsselbartes 14 federnd beaufschlagt. Durch den Eingriff des Federendes 16 a in die Ausnehmung 13 ist der Schlüssel 12 in der Schlüsselhalterung 2 arretiert und kann, obschon sein Griffteil 15 greifbar ist, nicht aus der Schlüsselhalterung herausgezogen werden. Der Nutzer, der das Fahrrad in diesem Zustand vorfindet, wählt als Erstes an seinem tragbaren Telefon 5 die Telefonnummer der Zentrale 3 (Callcenter). Die Verbindung mit der Zentrale 3 erfolgt über das Telefonnetz 4. Die Gesprächsführung mit der Zentrale kann dabei in dieser rechnergesteuert und durch Ansage von vorgespeicherten Mitteilungen und die Entgegennahme von Tonfolgen gemäss Tastaturbedienung des Nutzers an seinem Telefon 5 erfolgen. Solche Systeme sind bekannt (IVR, Interactive Voice Response) und werden daher hier nicht näher dargestellt. Im Schritt 20 von Figur 2 meldet sich der Nutzer derart bei der Zentrale 3 und gibt über die Tastatur seines Telefons 5 seinen persönlichen Kode ein, welcher ihn als berechtigten Nutzer ausweist. Die Zentrale gibt dem als berechtigt erkannten Nutzer dann z.B. die Anweisung 21, welche z.B. lauten kann: "Halten Sie Ihr Telefon an die Schlüsselbox und drücken Sie gleichzeitig den Schlüssel bis zur Schlüsselfreigabe". Der Nutzer wird entsprechend sein Telefon, so wie grundsätzlich in Figur 1 gezeigt, seitlich an die Sperrvorrichtung 2 halten, so dass Mikrofon 7 und Lautsprecher 10, Lautsprecher 8 und Mikrofon 9, akustisch gekoppelt sind. Der Benutzer wird ferner gemäss der Anweisung auf den Schlüssel 12 drücken (Schritt 22). Der Schlüssel 12 wird dadurch aus der in Figur 1 nicht gezeigten Arretierstellung heraus noch ein kleines Stück weiter in die Sperrvorrichtung 2 hinein bewegt, was aufgrund der Federeigenschaften der Arretierfeder 16 möglich ist. Dadurch betätigt der Schlüssel einen Schalter 19, der die Sperrvorrichtung 2 aktiviert. In Figur 1 sind lediglich beispielshalber zwei Mikroschalter 19 dargestellt, aber natürlich könnte die Aktivierung auch durch anders angeordnete Schalter, die auf die Schlüsselbewegung reagieren, oder auch z.B. aufgrund eines Druckschalters 32 erfolgen, der nicht auf die Schlüsselbewegung sondern auf das Anlegen des Telefons 5 an die Seitenfläche des Gehäuses der Schlüsselhalterung 2 reagiert. Durch ein solches bevorzugtes mechanisches "Aufwecken" der Sperrvorrichtung 2 wird diese aus ihrem Ruhezustand aktiviert, wobei entsprechende Stromquellen 31 mit der Steuerelektronik 6 verbunden werden. Die Stromquellen 31 sind dabei Batterien oder Akkumulatoren, allenfalls ergänzt um eine Solarzellenanordnung, welche die Akkumulatoren aufladen kann. Die Steuerelektronik 6 erzeugt nun eine für die jeweilige Sperrvorrichtung 2 individuelle Tonfolge, welche der Zentrale als Identifizierungskode die Identifizierung der jeweiligen Sperrvorrichtung 2 erlaubt, und gibt diese über den Lautsprecher 8 und das Mikrofon 9 des Telefons 5 über das Telefonnetz 4 an die Zentrale 3 ab. Diese erkennt somit, bei welchem Nutzungsobjekt sich der Nutzer befindet. Entsprechend wird in Schritt 23 von Figur 2 dieser Identifikationskode abgegeben und der Nutzer hält im Schritt 24 sein Telefon an die Sperrvorrichtung, wobei dieser Schritt auch vor dem Schritt 22 oder vor dem Schritt 23 erfolgen kann. Die Steuerelektronik 6 erzeugt dabei den Identifizierungskode, vorzugsweise mehrmals, gegebenenfalls mit dazwischenliegenden Pausen, so dass auch bei verzögertem Anlegen des Telefons 5 an die Sperrvorrichtung 2 durch den Nutzer die Übermittlung des Identifikationskodes an die Zentrale 3 erfolgen kann (Schritt 25). Die Zentrale kann den Empfang des Kodes durch ein Tonsignal, das über das Telefon 5 übertragen wird, quittieren.

Aufgrund des empfangenen Identifikationskodes der Sperrvorrichtung 2 kann die Zentrale 3 in ihrer Datenbank den gegenwärtig gültigen Öffnungskode für die Sperrvorrichtung 2 ermitteln. Dies kann ein fixer, der Sperrvorrichtung für mehrmaliges Öffnen zugeteilter Kode sein oder es kann ein Kode sein, der nach jeder Öffnung, bzw. Sperrung, geändert wird, wobei die Zentrale 3 die entsprechende Änderung kennt. Die Zentrale 3 wird dementsprechend nach der Identifikation der Sperrvorrichtung 2 den entsprechenden Öffnungskode im Schritt 26 von Figur 2 an die Sperrvorrichtung 2 senden. Sie gibt dazu die Kodetonfolge über das Telefonnetz 4 an das Telefongerät 5 ab, wodurch diese Tonfolge über den Lautsprecher 10 zum Mikrofon 7 gelangt und damit zur Steuerelektronik 6 der Sperrvorrichtung. Diese vergleicht den empfangenen Öffnungskode mit ihrem Öffnungskode und bewirkt bei Übereinstimmung ein Öffnen der Sperrvorrichtung. Im gezeigten Beispiel erfolgt dies dadurch, dass elektromagnetisch oder motorisch der Nocken 18 in Pfeilrichtung ausgelenkt wird und dementsprechend die Feder 16 auslenkt, so dass sich das Federende 16 a aus der Kerbe 13 des Schlüssels hinaus bewegt und diesen freigibt. Gleichzeitig drückt das freie Federende 17 den Schlüssel 12 nach aussen aus der Schlüsselhalterung 2 heraus. Der Schritt 27 von Figur 2 ist die entsprechende Schlüsselfreigabe. Hat die Sperrvorrichtung den Schlüssel dementsprechend freigegeben, was vorzugsweise durch einen der Mikroschalter 19 kontrolliert wird, so wird bevorzugterweise die Steuerelektronik 6 wiederum über den Lautsprecher 8 und das Mikrofon 9 ein Quittiersignal an die Zentrale 3 aussenden, das angibt, dass der Schlüssel freigegeben worden ist. Die Zentrale geht bei Erhalt des Quittierungssignals davon aus, dass nun die Nutzung des Fahrrades durch den Nutzer beginnt. Der Schritt 28 von Figur 2 zeigt die Abgabe des Quittierungssignals, dass z.B. aus der Tonfolge für Raute und C bestehen kann. Es kann dabei, wie in der Figur 2 gezeigt, ein Zeitkriterium eingeführt werden, innerhalb welchem von der Schlüsselfreigabe ausgehend das Quittiersignal abgegeben wird. Ist der Schlüssel freigegeben, so kann im Schritt 29 eine Anzeige der Sperrvorrichtung dies anzeigen, z.B. eine von Grün auf Rot wechselnde Leuchtdiode und im Schritt 30 beginnt nun der Nutzungstarif für die Fahrradnutzung. Der Nutzer kann mittels des freigegebenen Schlüssels 12 das vorhandene Fahrradschloss aufschliessen und das Fahrrad benützen.

Die Ausführung als Schlüsselhalter hat den Vorteil, dass der Nutzer das Fahrrad nun auch während kurzen Nutzungspausen abschliessen kann und die Nutzung behält, ohne sich speziell bei der Zentrale abmelden zu müssen.

Bei den verschiedenen Verzweigungen "Nicht OK" in Figur 1 können verschiedene Störungen vorliegen, so z.B. kein mobiler Telefonempfang bei der ersten Schleife von Schritt 20, ein defektes Schloss bei der zweiten Schleife von Schritt 23, Akustikprobleme bei der dritten Schleife von Schritt 26 und z.B. auch Akustikprobleme, defektes Schloss oder verklemmter Schlüssel bei der Schleife von Schritt 28. Da der Nutzer direkt mit der Zentrale verbunden ist, kann im jeweiligen Fall die Zentrale eine Kurzmitteilung (SMS) an das Telefon des Nutzers schicken, oder dieser kann sich über eine Tastenkombination in eine Online-Hilfe der Zentrale einwählen.

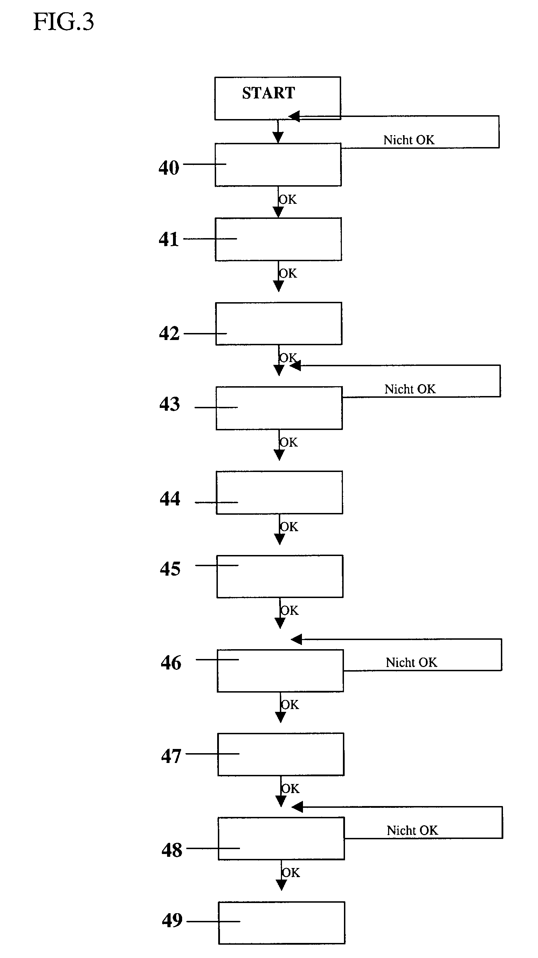

Figur 3 zeigt in gleicher Schrittdarstellung wie Figur 2 die Abgabe des Fahrrades nach erfolgter Nutzung. Es erfolgt dabei im Schritt 40 wiederum der Anruf an die Zentrale 3, gegebenenfalls unter Angabe der persönlichen Identifikationsnummer. Die Zentrale kann ein Auswahlmenue bereitstellen, in welchem der Nutzer durch Tastendruck auf seinem Telefon zu der Funktion Rückgabe eines genutzten Fahrrades gelangt. Aufgrund dieser Auswahl wird im Schritt 41 z.B. der Ansagetext: "Halten Sie Ihr Telefon an die Schlüsselbox, führen Sie den Schlüssel bis zur Einrastung ein und warten Sie bis die Anzeige von Rot auf Grün blinkt" erfolgen. Entsprechend schiebt der Nutzer im Schritt 42 den Schlüssel 12, mit welchem er das Fahrradschloss nach der Nutzung verriegelt hat, in die Schlüsselhalterung 2. Die Schlüsselhalterung 2 erkennt das Einschieben des Schlüssels 12 durch einen der Mikroschalter 19, geht bevorzugterweise dadurch aus dem Ruhezustand in den Betriebszustand über, und die Steuerelektronik 6 gibt über den Lautsprecher 8 den Identifikationskode der jeweiligen Sperrvorrichtung 2 als Tonfolge aus (Schritt 43). Im Schritt 44 hält der Nutzer sein Telefongerät, wie in Figur 1 gezeigt, seitlich an die Sperrvorrichtung, wobei dieser Schritt 44 auch vor dem Schritt 43 oder 42 erfolgen kann. Der über den Lautsprecher 8 abgegebene Identifikationskode geht über das Mikrofon 9 und das Telefonnetz 4 an die Zentrale 3 (Schritt 45). In einem nächsten Schritt 46 kann ein Schliess- oder Quittierungskode von der Schlüsselhalterung 2 wiederum über den Lautsprecher 8 und das Mikrofon 9 an die Zentrale abgegeben werden. Es kann auch umgekehrt von der Zentrale 3 ein Schliesskode via den Lautsprecher 10 und das Mikrofon 7 an die Elektronik 6 abgegeben werden. Es kann jeweils auch ein zusätzliches Quittierungssignal für korrekten Erhalt des jeweiligen Kodes vom jeweiligen Empfänger abgegeben werden. Jedenfalls ist im Schritt 47 vorgesehen, dass der Schlüssel 12 erneut in der Halterung 2 arretiert ist, indem das freie Ende 16 a der Feder 16 in die Kerbe 13 in Eingriff gekommen ist. Dies erfolgt durch das vollständige Einschieben des Schlüssels 12 in die Sperrvorrichtung 2, so dass der federnde Teil 16 a von alleine in die Kerbe 13 springt und den Schlüssel 12 arretiert. Der Schritt 47, die Arretierung, erfolgt in diesem Fall eigentlich bereits nach Schritt 42 und vor dem Austausch der Mitteilungen. Es ist indes auch möglich, die Feder 16 durch den Nocken 18 in Offenstellung zu fahren, sobald durch das anfängliche Einschieben des Schlüssels die Sperrvorrichtung 2 aus ihrem Ruhezustand in den Bereitschaftszustand gegangen ist, und die Arretierung durch Rückschwenken des Nockens 18 erst dann vorzunehmen, wenn die Mitteilungen zwischen Zentrale und Sperrvorrichtung ausgetauscht worden sind, wie dies an sich in Figur 3 mit der Position des Schritts 47 dargestellt ist. Ferner kann im Schritt 48 wiederum die Anzeige von Rot auf Grün wechseln, so dass es für einen neuen Nutzer ersichtlich ist, dass das Fahrrad wieder zur Nutzung bereit steht. Im Schritt 49 wird die Nutzung durch die Zentrale 3 als beendet registriert. Auch bei der Abgabe kann beim Entstehen von Problemen (Schleifen "Nicht OK") eine Kurzmitteilung an den Nutzer gesandt werden oder dieser kann Online-Hilfe anfordern.

Bei einer weiteren Ausführungsform der Erfindung ist die Sperrvorrichtung direkt das Fahrradschloss und weist einen im Schloss elektromechanisch sperrbaren und freigebbaren Schlossbügel auf. Der Austausch der Mitteilungen zwischen Fahrradschloss 2 und Zentrale 3 erfolgt dabei vorzugsweise ebenfalls über die beschriebene akustische Kopplung mit Zweiwegkommunikation. Anstelle des mechanischen "Weckens" des Schlosses 2 aus seinem Ruhezustand (das mit einer entsprechenden Taste 32 auch möglich wäre) kann dabei - wie es auch im vorigen Beispiel der Fall sein könnte - das Aktivieren des Schlosses durch Weckimpulse erfolgen, die von der Zentrale ausgesandt werden. Das Schloss muss dabei allerdings im Ruhebetrieb zeitweise einen Teil der Elektronik 6 und das Mikrofon 7 aktivieren, um solche Weckimpulse feststellen zu können.

Da kein Schlüssel 12 vorhanden ist, sollte ferner vorzugsweise eine Möglichkeit zur kurzzeitigen Nutzungsunterbrechung bei reserviert bleibendem Fahrzeug geschaffen werden. Die entsprechenden Abläufe können bei dieser Ausführung wie folgt stichwortartig geschildert werden
1. Fahrzeug ausmieten: Kunde kommt zum Fahrzeug; Kunde wählt Nummer der Zentrale und legitimiert sich; Ansagetext der Zentrale: Wollen Sie ein Fahrzeug ausmieten, drücken Sie die Taste 1; wollen Sie Ihr gemietetes Fahrzeug kurz abstellen und reservieren, drücken Sie die Taste 2; wollen Sie Ihr reserviertes Fahrzeug weiterbenützen, drücken Sie die Taste 3; wollen Sie Ihr gemietetes Fahrzeug abstellen und zurückgeben, drücken Sie die Taste 4; Kunde drückt Taste 1 und hält sein Telefon an das Mikrofon des Schlosses; Zentrale übermittelt "Weckimpulse" 1-1-1-1...(dieser Kode und die folgenden Kodes sind nur als Beispiele zu verstehen) ans Schloss; Schloss übermittelt seine Erkennungsnummer 9-9-9-9; Zentrale übermittelt Öffnungskode 1-2-3-4; Relaiskontakt schliesst bei richtigem Kode für 0.5s, Schlossbügel springt heraus; Schloss geht in Ruhezustand; Kunde verstaut Schlossbügel am Fahrzeug und fährt los; Schloss zeigt mechanisch an, dass es reserviert ist.
2. Fahrzeug abstellen und reservieren:
   Schritte bis und mit Ansagetext wie oben; Kunde drückt Taste 2 und hält das Telefon ans Mikrofon des Schlosses; Zentrale übermittelt "Weckimpulse" 1-1-1-1...ans Schloss; Schloss übermittelt seine Erkennungsnummer 9-9-9-9; Zentrale (Callcenter) übermittelt Reservationskode 3-4-5-6; Relaiskontakt schliesst bei richtigem Kode für 0.5s; Schlossbügel kann eingeführt und verriegelt werden; Schloss geht in Ruhezustand; Schloss zeigt mechanisch an, dass es reserviert ist.
3. Reserviertes Fahrzeug weiterbenützen:
   Schritte bis und mit Ansagetext wie oben; Kunde drückt Taste 3 und hält sein Telefon an das Mikrofon des Schlosses; Zentrale übermittelt "Weckimpulse" 1-1-1-1... ans Schloss; Schloss übermittelt seine Erkennungsnummer 9-9-9-9; Zentrale übermittelt Öffnungskode 5-6-7-8; Relaiskontakt schliesst bei richtigem Kode für 0.5s, Schlossbügel springt heraus; Kunde verstaut Schlossbügel am Fahrzeug; Schloss zeigt mechanisch an, dass es reserviert ist.
4. Rückgabe des Fahrzeuges: Schritte bis und mit Ansagetext wie oben; Kunde drückt Taste 4 und hält sein Telefon ans Mikrofon des Schlosses; Zentrale übermittelt "Weckimpulse" 1-1-1-1...ans Schloss; Schloss übermittelt seine Erkennungsnummer 9-9-9-9; Zentrale übermittelt Schliessungskode 7-8-9-0; Relaiskontakt schliesst bei richtigem Kode für 0.5s; Schlossbolzen kann eingeführt und verriegelt werden; Fahrzeug zeigt mechanisch an, dass es nicht reserviert ist.

Anstelle der bei den vorgängig beschriebenen Ausführungsformen verwendeten akustischen Kopplung zwischen Sperrvorrichtung und tragbarem Telefon kann auch eine optische Kopplung für Telefone mit optischer (IR) Schnittstelle vorgesehen sein. Bevorzugt ist ferner eine Funkschnittstelle zwischen Sperrvorrichtung 2 und Telefon 5, wobei dabei natürlich dessen Netzzugang zum Telefonnetz 4 weiterhin bestehen muss. Solche Funkschnittstellen sind bekannt. Bevorzugt ist eine solche nach dem bekannten Bluetooth-Standard.

## Patentansprüche

1. Sperrvorrichtung (2) zur Freigabe oder Sperrung der Nutzung eines Objektes, welche Sperrvorrichtung zur Abgabe eines sie gegenüber einer Zentrale (3) identifizierenden Kodes und zur Annahme eines Freigabekodes von der Zentrale ausgestaltet ist, **dadurch gekennzeichnet, dass** die Sperrvorrichtung mit einer Schnittstelle (6, 7, 8) zur Zweiwegkommunikation mit einem tragbaren Telefongerät (5) ausgerüstet ist.

2. Sperrvorrichtung nach Anspruch 1, **dadurch gekennzeichnet, dass** diese durch eine von Hand betätigbare Weckeinrichtung (12, 19; 32) oder durch den Empfang eines Weckkodes von der Zentrale über das tragbare Telefon von einem Ruhezustand in den Zweiwegkommunikationsbetrieb schaltbar ist.

3. Sperrvorrichtung nach Anspruch 1 oder 2, **dadurch gekennzeichnet, dass** die Schnittstelle einen Lautsprecher (8) und ein Mikrofon (7) aufweist, an welche gleichzeitig das Mikrofon (9) und der Lautsprecher (10) des Telefons (5) akustisch ankoppelbar sind.

4. Sperrvorrichtung nach Anspruch 1 oder 2, **dadurch gekennzeichnet, dass** die Schnittstelle mit einer Infrarot-Sende/Empfangseinheit versehen ist, die zur Kommunikation mit einer Infrarot-Schnittstelle eines tragbaren Telefons ausgestaltet ist.

5. Sperrvorrichtung nach Anspruch 1 oder 2, **dadurch gekennzeichnet, dass** diese mit einer Funkschnittstelle, insbesondere nach dem Bluetooth-Standard, ausgerüstet ist, welche zur Kommunikation mit einer entsprechenden Funkschnittstelle des tragbaren Telefons ausgestaltet ist.

6. Sperrvorrichtung nach einem der Ansprüche 1 bis 5, **dadurch gekennzeichnet, dass** diese als Fahrradschloss ausgestaltet ist.

7. Sperrvorrichtung nach einem der Ansprüche 1 bis 5, **dadurch gekennzeichnet, dass** diese als Schlüsselhalterung (2) ausgestaltet ist, welche einen Schlüssel (12) arretiert oder freigibt.

8. Sperrvorrichtung nach Anspruch 7, **dadurch gekennzeichnet, dass** diese zum Einschieben, bzw. Herausziehen, des Schlüssels ausgestaltet ist, wobei insbesondere ein elektromechanisch oder motorisch betätigbares Arretierglied (16, 16a) vorgesehen ist, welches zum Eingriff in eine Ausnehmung (13) des Schlüssels bestimmt ist.

9. Sperranlage (1) umfassend eine Mehrzahl von Sperrvorrichtungen (2) nach einem der Ansprüche 1 bis 8 sowie eine Zentrale (3) zur Nutzerverwaltung und Kommunikation mit den Sperrvorrichtungen.

10. Nutzobjekt, insbesondere Fahrrad, mit einer Sperrvorrichtung (2) nach einem der Ansprüche 1 bis 8.

11. Fahrrad nach Anspruch 10, **dadurch gekennzeichnet, dass** dieses mit einer als Schlüsselhalterung ausgestalteten Sperrvorrichtung (2), insbesondere nach Anspruch 7 oder 8, und mit einem Fahrradschloss mit einem Schlüssel (12) versehen ist, welcher Schlüssel zur Arretierung in der Schlüsselhalterung geeignet ist.

12. Verfahren zur zeitlich begrenzten Nutzung von Nutzobjekten, insbesondere Fahrrädern, die jeweils mit einer Sperrvorrichtung (2) versehen sind, welche unter Kontrolle einer von den Nutzobjekten getrennten Zentrale (3) stehen, wobei zu Nutzungsbeginn der Nutzer der Zentrale das Nutzobjekt mitteilt und diese einen Öffnungskode mitteilt und bei Nutzungsende der Nutzer einen Kode an die Zentrale mitteilt, der diese zur Registrierung des Nutzungsendes veranlasst, **dadurch gekennzeichnet, dass** diese Mitteilungen direkt von der Zentrale (3) über ein tragbares Telefon (5) des Nutzers in die Sperrvorrichtung (2) eingekoppelt werden, und von der Sperrvorrichtung in das tragbare Telefon eingekoppelt und an die Zentrale übermittelt werden.

13. Verfahren nach Anspruch 12, **dadurch gekennzeichnet, dass** zur Aufnahme des bidirektionalen Mitteilungsbetriebes die Sperrvorrichtung in den Betriebszustand versetzt wird, indem von der Zentrale via das tragbare Telefon ein Weckkode an die dauernd oder intermittierend im Empfangsmodus betriebene Sperrvorrichtung gesandt wird und/oder indem ein Weckschalter (12, 19; 32) an der Sperrvorrichtung von Hand betätigt wird.

14. Verfahren nach Anspruch 13, **dadurch gekennzeichnet, dass** der Weckschalter durch Bewegung des Schlüssels bei einer als Schlüsselhalterung ausgestalteten Sperrvorrichtung betätigt wird.

15. Verfahren nach einem der Ansprüche 12 bis 14, **dadurch gekennzeichnet, dass** die Sperrvorrichtung als Schlüsselhalterung ausgestaltet ist, dass nach Bewegung des Schlüssels die Sperrvorrichtung einen Identifikationskode in das mit der Zentrale in Verbindung stehende tragbare Telefon einkoppelt und die Zentrale nach Empfang und Auswertung des Identifikationskodes zur Nutzungsfreigabe einen Öffnungskode via tragbares Telefon des Nutzers in die Sperrvorrichtung einkoppelt, worauf der Schlüssel, der insbesondere ein Schlüssel für das Fahrradschloss ist, freigegeben wird.

16. Verfahren nach einem der Ansprüche 12 bis 15, **dadurch gekennzeichnet, dass** die Sperrvorrichtung als Schlüsselhalterung ausgestaltet ist, dass nach Einschieben des Schlüssels in die Schlüsselhalterung die Sperrvorrichtung über das mit der Zentrale in Verbindung stehende tragbare Telefon des Nutzers ihren Identifikationskode an die Zentrale mitteilt und, gegebenenfalls nach einer Aufforderung durch die Zentrale über das tragbare Telefon, einen Quittungskode an die Zentrale abgibt und den Schlüssel arretiert.
